# EUROPEAN PATENT SPECIFICATION

(11) **EP 2 825 415 B1**
(45) Date of publication and mention of the grant of the patent: **04.05.2016**
(21) Application number: 12709099.1
(22) Date of filing: 15.03.2012
(51) Int. Cl.: B60Q 1/08, B60Q 1/22

(54) **HEADLIGHT SYSTEM AND CONTROL METHOD**
SCHEINWERFERSYSTEM UND STEUERVERFAHREN
SYSTÈME DE PHARE ET PROCÉDÉ DE COMMANDE

(43) Date of publication of application: 21.01.2015
(73) Proprietor: Toyota Motor Europe NV/SA, 1140 Brussels (BE)
(72) Inventor: GILLET, Christophe, F-78320 Levis Saint Nom (FR)
(74) Representative: Intès, Didier Gérard André
(86) International application number: PCT/EP2012/054585
(87) International publication number: WO 2013/135294

(56) References cited:
- EP-A1- 2 026 099
- EP-A2- 1 462 309
- DE-A1- 19 845 567
- US-A- 5 754 100

## Description

### TECHNICAL FIELD

The disclosure relates to the field of motor vehicle headlight systems, and in particular to a method for controlling a motor vehicle headlight, and to a motor vehicle comprising a headlight system with a headlight control unit.

### BACKGROUND

In the field of motor vehicles, the use of proximity sensors as driving and parking aids is becoming increasingly common. As "proximity sensors" are understood, in the context of the present disclosure, any sort of contactless sensors suitable for detecting the relative position of obstacles within the detection range of the sensor. Among such proximity sensors are ultrasonic sensors, radar sensors, lidar sensors and stereo imaging systems. These proximity sensors are particularly useful for drivers maneuvering their motor vehicles in confined spaces. Typically, such proximity sensors are installed at both the front and rear ends of the vehicle, although sometimes they are installed at the rear end only, since rearward visibility is usually more compromised.

It is known in the art to display the relative position of the obstacle in a video display unit onboard the motor vehicle, so as to inform the driver. However, concentrating on such an internal display may reduce the driver's spatial awareness. For this reason, a headlight control unit and method have been proposed in German patent application publication DE 10 2009 001 348 A1 which activate a headlight side beam to directly highlight an obstacle detected by a proximity sensor onboard the vehicle, so that the driver is made aware of the position of the obstacle without having to look at an internal display unit. On the other hand, US patent 5,754,100 disclosed a headlight control unit and method that activates a headlight side beam in reverse.

A drawback of such prior art devices and methods is that, when the motor vehicle is reversing along a curved path, its front end corners may approach obstacles which remain undetected by the front end proximity sensors until very late. In that case, even when an outwardly-angled front end proximity sensor detects the obstacle and warns the driver before an actual collision, the driver's reaction may be too slow to avoid the collision.

### SUMMARY

A first object of the disclosure is that of providing a method for controlling a motor vehicle headlight which helps drivers identify and locate a potential obstacle to a front end corner of the motor vehicle in reverse in a timely manner and without distracting the driver from the outside environment.

According to at least a first aspect of the present disclosure, such a method can comprise the steps of:
- determining whether the motor vehicle is reversing ;
- measuring a position of an obstacle within a detection range of a rear end proximity sensor of a set of proximity sensors of the motor vehicle ;
- calculating a path of the obstacle within detection range of the rear end proximity sensor relatively to the reversing motor vehicle ;
- determining whether said calculated path enters a predetermined range of a front end corner of the motor vehicle; and
- if said calculated path crosses into said predetermined range of a front end corner of the motor vehicle, activating a headlight side beam associated with said front end corner.

Consequently, the headlight side beam is activated in time to highlight the potential obstacle to that front end corner of the car before a collision. As "headlight side beam" can be understood, in the context of the present disclosure, any lighting pattern diverging laterally from a normal pattern of the motor vehicle headlights in the direction of the obstacle, whether this diverging pattern is achieved by a swiveling headlight, an adaptive headlight, a separate lateral lighting device or any other means.

According to a second aspect of the present disclosure, this method may also comprise the steps of:
- measuring a position of an obstacle within a detection range of a front end proximity sensor of said set of proximity sensors ;
- determining whether the position of the obstacle within detection range of the front end proximity sensor is within said predetermined range of a front end corner of the motor vehicle ; and
- if the position of the object within detection range of the front end proximity sensor is within said predetermined range of a front end corner of the motor vehicle and a headlight side beam associated with said front end corner is not already active, activating this headlight side beam.

Additionally, in this case, if the position of the object within detection range of the front end proximity sensor is within said predetermined range of a front end corner of the motor vehicle and a headlight side beam associated with said front end corner is already active, said headlight side beam may be steered so as to track the obstacle.

Consequently, the headlight side beam will also highlight obstacles approaching from a forward direction, and eventually track either kind of obstacle once it is within said predetermined range of the front end corner.

According to a third aspect of the present disclosure, said set of proximity sensors could be activated only if the motor vehicle is not moving forward faster than a predetermined speed, that is, only if it moving forward at said predetermined speed or less, is stopped, or is reversing. In particular, said set of proximity sensors could be activated only if a transmission unit of said motor vehicle is also engaged in a forward or reverse drive position. This would ensure that the activation of the headlight side beam to highlight a nearby obstacle would only take place when most necessary, that is, when the driver is maneuvering at low speed in a confined space, and during normal driving, which could unnecessarily distract the driver, or when the car is parked, which would unnecessarily drain the power supply of the headlights.

A second object of the present disclosure is that of providing a headlight control unit for use in a motor vehicle equipped with at least a rear end proximity sensor to help drivers identify and locate a potential obstacle to a front end corner of the motor vehicle in reverse in a timely manner and without distracting the driver from the outside environment.

According to a fourth aspect of the present disclosure, such a headlight control unit can be configured to activate a headlight side beam associated with a front end corner of the motor vehicle if the vehicle is reversing and the rear end proximity sensor detects an obstacle with a calculated path, relative to the motor vehicle, that enters a predetermined range of said front end corner of the vehicle.

According to a fifth aspect of the present disclosure, this headlight control unit may be incorporated in a motor vehicle headlight system, comprising a set of headlights, each headlight of said set having a side beam.

According to a sixth aspect of the present disclosure, this motor vehicle headlight system may be incorporated in a motor vehicle with a set of proximity sensors comprising at least a rear end proximity sensor connected to said headlight control unit. In particular, this set of proximity sensors may be incorporated in a parking assistance system of the motor vehicle.

The above summary of some aspects of the present disclosure is not intended to describe each disclosed embodiment or every implementation of the invention. In particular, selected features of any illustrative embodiment within this specification may be incorporated into an additional embodiment unless clearly stated to the contrary.

### BRIEF DESCRIPTION OF THE DRAWINGS

The invention may be more completely understood in consideration of the following detailed description of an embodiment in connection with the accompanying drawings, in which :
- FIG. 1 is a schematic drawing illustrating a motor vehicle according to an embodiment of the invention ;
- FIG. 2A illustrates the motor vehicle of FIG. 1 approaching an obstacle in forward motion ;
- FIG. 2B illustrates the motor vehicle of FIG. 1 approaching an obstacle in reverse ;
- FIG. 3 is a state diagram illustrating a headlight control method for the motor vehicle of FIG. 1 ;
- FIG. 4 is a flow chart also illustrating the method of FIG. 3;
- FIG. 5 is a flow chart illustrating in detail the steps for determining whether the side beam should be activated, in the method of FIG. 4; and
- FIG. 6 is a flow chart illustrating in detail the steps for activating and deactivating the side beam in the method of FIG. 4, after the determination of FIG. 5.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

### DETAILED DESCRIPTION

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

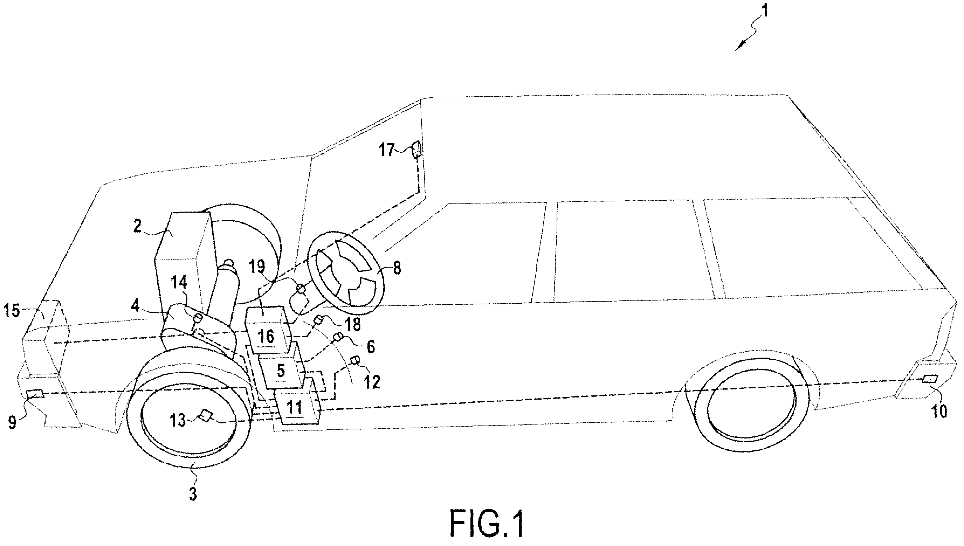

A motor vehicle 1 is illustrated in FIG. 1 which incorporates a drivetrain comprising an engine 2 driving a set of wheels 3 over a transmission unit 4. The engine 2 may be, for example, an internal combustion engine, an electric motor, or a combination of both, for instance in an hybrid drivetrain. The transmission unit 4 may be a manual, automatic or semiautomatic transmission unit with transmission mode selection means (not illustrated) allowing driver selection between at least a forward drive mode, a reverse drive mode and a neutral mode. At least the engine 2 is connected to an electronic control unit ECU 5 with an ignition switch 6 for powering the motor vehicle 1 on and off. The motor vehicle 1 also incorporates a steering system allowing driver control of the vehicle's path over, for example, a steering wheel 8.

The illustrated motor vehicle 1 also comprises a parking assistance system comprising a set of proximity sensors including forward end proximity sensors 9 and rear end proximity sensors 10 connected to a parking assistance unit 11. Both the forward end proximity sensors 9 and the rear end proximity sensors 10 may be distributed over the whole width of the motor vehicle 1 to ensure a complete coverage around both ends. In particular, some of the forward end and rear end proximity sensors 9,10 may be located close to the corners of the motor vehicle 1, outwardly angled in order to be able to detect obstacles being approached by the motor vehicle 1 when it is turning. The parking assistance unit 11 is connected to a parking assistance switch 12 for activating and deactivating the parking assistance system when the motor vehicle is powered on. The parking assistance unit 11 is also connected to a motion sensor 13 and to a transmission mode sensor 14, in order to detect the current speed and transmission mode of the motor vehicle 1. The parking assistance unit 11 may further be connected to driver output means, such as a loudspeaker or a display unit, in order to warn the driver of an obstacle.

The illustrated motor vehicle 1 further comprises a headlight system comprising a set of headlights 15, typically located at the front end of the motor vehicle 1, connected to a headlight control unit 16. The headlight control unit 14 is in turn connected to a darkness sensor 17 and/or to a light switch 18, in order to activate and deactivate the headlight system either automatically or by driver input. The headlights 15 have, apart from at least one standard forward lighting pattern, side beams to either side of the motor vehicle 1. These side beams may be formed, for example, by swiveling and/or separate light sources within the headlights 15. The headlight control unit 16 is also connected to a steering sensor 19 for detecting a steering angle of the motor vehicle 1, which may be used to activate and/or steer the side beams when the motor vehicle 1 is turning.

In the illustrated motor vehicle 1, the headlight control unit 14 is also connected to the parking assistance unit 11, in order to activate and even steer the side beams when an obstacle has been detected by the forward or rear end proximity sensors 9,10. For this purpose, the headlight control unit 14 is configured so as to activate a headlight side beam associated with a front end corner of the motor vehicle 1 either if a front end proximity sensor 9 detects an obstacle within a predetermined range of the front end corner of the motor vehicle 1, or if the motor vehicle is reversing and a rear end proximity sensor 10 detects an obstacle with a calculated path, relative to the motor vehicle 1, that enters said predetermined range of the front end corner of the motor vehicle 1. Although the electronic control unit ECU 5, parking assistance unit 11 and headlight control unit 16 are shown as separate units, some or all of them may be integrated in a single control unit. Also, while the ignition switch 6, parking assistance switch 12 and light switch 18 are illustrated as physical pushbuttons, any other suitable user input device, such as for instance a touchscreen or voice recognition, may be used instead of or in combination with such pushbuttons.

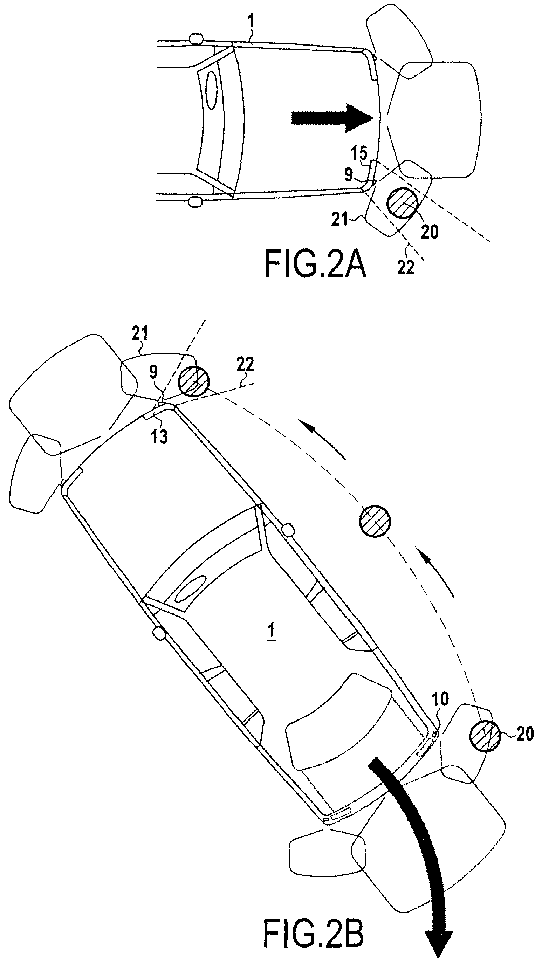

These two cases are illustrated in, respectively, FIGS. 2A and 2B. In FIG. 2A, the motor vehicle 1 is moving forward and approaches an obstacle 20, which is within detection range of one of the front end proximity sensors 9 which is associated to a front end corner of the motor vehicle 1. If the obstacle 20 enters a predetermined range 21 of this front end corner, the headlight control unit 16 will activate the side beam 22 of the corresponding headlight 13 to highlight this obstacle. The driver can thus be made aware of the obstacle 20, which the side beam 22 also enables him to track visually without having to look into an onboard display unit. Nevertheless, the presence of the obstacle 20 within said predetermined range 21 may also be simultaneously indicated to the driver by other means, such as a video display unit or a sound signal. The size and shape of the predetermined range 21 may depend from a number of parameters, such as the speed of the motor vehicle 1, its path, and/or driving conditions. Consequently, the side beam 22 may be activated earlier if the motor vehicle 1 is travelling at a certain speed, on a strongly curved path and/or over slippery ground.

In FIG. 2B, the motor vehicle 1 is reversing on a curved path. If the obstacle 20, which is within detection range of a rear end proximity sensor 10, is set to enter the predetermined range 21 of a front end corner under this path, the headlight control unit 16 will also activate the side beam 22 of the corresponding headlight 13 to highlight this obstacle 20. As in the previous case, the driver can thus be made aware of the obstacle 20, which the side beam 22 will also enable him to track visually, when it approaches the front end corner, without having to look into an onboard display unit.

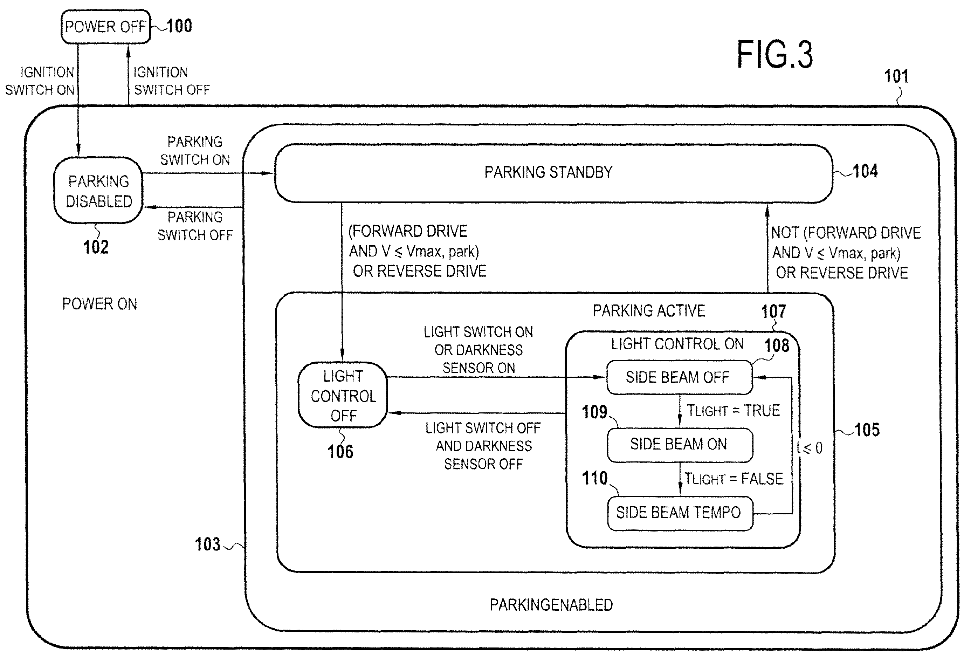

A method for controlling the headlights 13 of the motor vehicle 1 according to this embodiment will be described with reference to FIGS. 3 to 6. This method may be implemented using a programmable data processing unit carrying out a suitable program, or embodied in a hardwired electronic circuit.

FIG. 3 is a state diagram showing the different states of the motor vehicle 1 during the implementation of this method. It is thus illustrated how the motor vehicle 1 can be switched between a POWER OFF state 100 and a POWER ON state 101 using the ignition switch 6. Within the POWER ON state 101, the parking assistance system can be switched between a PARKING DISABLED state 102, in which it is disabled, and a PARKING ENABLED state 103 using the parking assistance switch 12, wherein the PARKING DISABLED state 102 is the default state. Even in the PARKING ENABLED state 103, the parking assistance system is enabled but not necessarily active. Within this PARKING ENABLED state 103, the parking assistance unit 11 can switch between a PARKING STANDBY state 104, in which the parking assistance unit 11 is in standby, and a PARKING ACTIVE state 105, in which the various elements of the parking assistance system are active. The PARKING STANDBY state 104 is the default state, and the parking assistance unit 11 switches into the PARKING ACTIVE state 105 only when the transmission unit 4 is in a reverse drive mode, or when the transmission unit 4 is in a forward drive mode and the speed of the motor vehicle 1 is not higher than a predetermined threshold v_{maxUPA}, which may be, for example, 15 km/h.

When the parking assistance system is in the PARKING ACTIVE state 105, the headlight system may be in an inactive LIGHT CONTROL OFF state 106 or in an active LIGHT CONTROL ON state 107. The LIGHT CONTROL OFF state 107 is the default state, and the headlight system switches into the LIGHT CONTROL ON state 107 only when the darkness sensor 17 indicates that ambient luminosity is below a certain threshold, or when the light switch 18 is on.

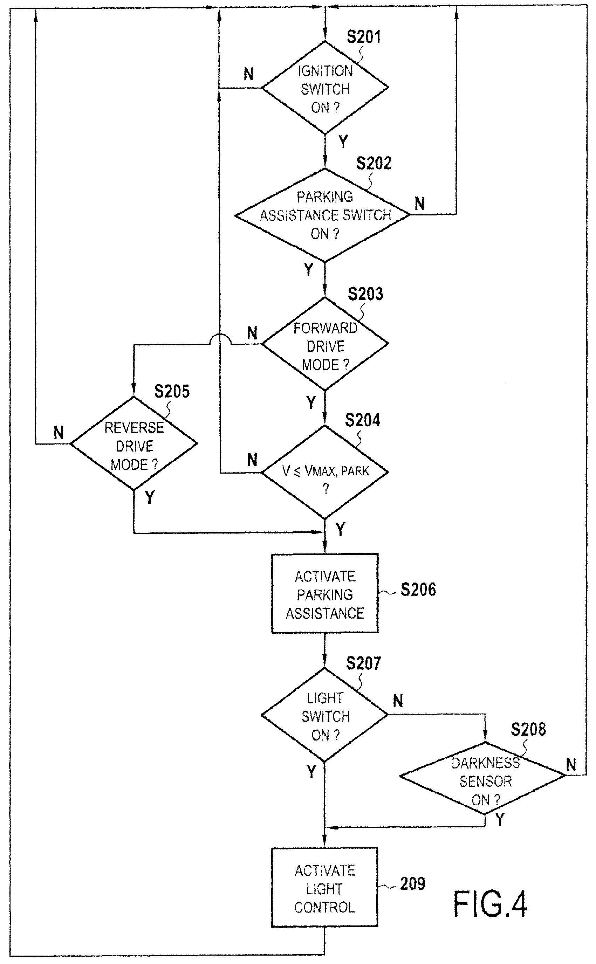

The process of activating the parking assistance system and the headlight system is also illustrated by the flowchart of FIG. 4. In a first step S201, it is checked whether the ignition switch 6 is in an ON or an OFF position. If the ignition switch 6 is in an OFF position, the process jumps directly to the end. If the ignition switch 6 is in an ON position, the process advances to step S202. In step S202 wherein it is checked whether the parking assistance switch 12 is in an ON or an OFF position. If the parking assistance switch 12 is in an OFF position, the process jumps back to step S201. If the parking assistance switch 12 is in an ON position, the process advances to step S203. In step S203 it is checked whether the transmission unit 4 is in a forward drive mode. If the transmission unit 4 is in a forward drive mode, the process advances to step S204, wherein it is checked whether the speed v of the motor vehicle 1 is not higher than the v_{max,park} threshold. If the transmission unit 4 is not in a forward drive mode, the process advances to step S205, wherein it is checked whether the transmission unit 4 is in a reverse drive mode. If the transmission unit 4 is in neither a forward nor a reverse drive mode, or if the transmission unit 4 is in a forward drive mode, but the speed v of the motor vehicle 1 is above the v_{max,park} threshold, the process jumps back to step S201. If the transmission unit 4 is in a reverse drive mode, or if it is in a forward drive mode and the speed v of the motor vehicle 1 is not higher than the v_{max,park} threshold, the process advances to step S206, in which the parking assistance system is activated, and then to step S207 in which it is checked whether the light switch 18 is in an ON position. If the light switch 18 is not in an ON position, the process advances to step S208, in which it is checked whether darkness sensor when the darkness sensor 17 indicates that ambient luminosity is below a certain threshold. If in step S208 the darkness sensor 17 does not indicate an ambient luminosity below said threshold, the process jumps back to step S201. If the light switch 18 is in an ON position, or the darkness sensor 17 indicates that the ambient luminosity is below said threshold, the process advances to step S209, in which the headlight system is activated.

Turning back to FIG. 3, when the parking assistance system is active, that is, in the PARKING ACTIVE state 105, and the headlight system is also active, that is, in the LIGHT CONTROL ON state 107, the default state of the side beam 22 is an inactive SIDE BEAM OFF state 108. The side beam 22 is activated, and changes to a SIDE BEAM ON state 109, if a condition T_{Light} is fulfilled (T_{Light}=TRUE).

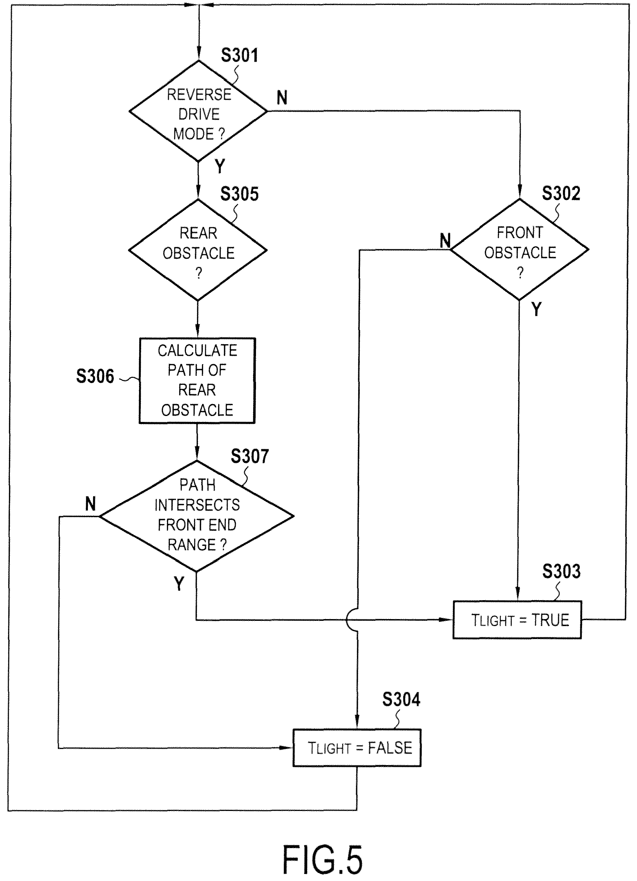

The flowchart in FIG. 5 illustrates the process of determining whether condition T_{Light} is fulfilled, that is, whether the side beam 22 should be activated. In a first step S301 it is determined whether the transmission unit 4 is in a reverse drive mode. If the transmission unit 4 is not in a reverse drive mode, the process proceeds to advance to a step S302 in which it is determined whether a front end proximity sensor 9 is detecting an obstacle in the predetermined range 21 of the front end corner associated to the side beam 22, in which case the condition T_{Light} is considered to be fulfilled and the process advances to step S303 in which T_{Light} is set to TRUE. If, on the other hand, it is determined in step S302 that there is not any obstacle in the predetermined range 21 of the front end corner associated to the side beam 22, the condition T_{Light} is considered not to be fulfilled, and the process advances to step S304 in which T_{Light} is set to FALSE.

If in step S301 it has been determined that the transmission unit 4 is in a reverse drive mode, the process advances to step S305, wherein it is checked whether a rear end proximity sensor 10 is detecting an obstacle. If no obstacle is being detected by a rear end proximity sensor 10, the condition T_{Light} is considered not to be fulfilled, and the process advances to step S304 in which T_{Light} is set to FALSE. If an obstacle is being detected by a rear end proximity sensor 10, the process advances to step S305, in which it is the path of the sensed obstacle relative to the motor vehicle 1 is calculated, based, for instance, on the input from the motion sensor 13 and steering sensor 19, and then on to step S306, in which it is determined whether, on this calculated path, the obstacle is set to enter the predetermined range 21 of the front end corner associated to the side beam 22, in which case the condition T_{Light} is considered to be fulfilled and the process advances to step S303 in which T_{Light} is set to TRUE. If the obstacle is not set to enter the range 21, the condition T_{Light} is considered not to be fulfilled, and the process advances to step S304 in which T_{Light} is set to FALSE.

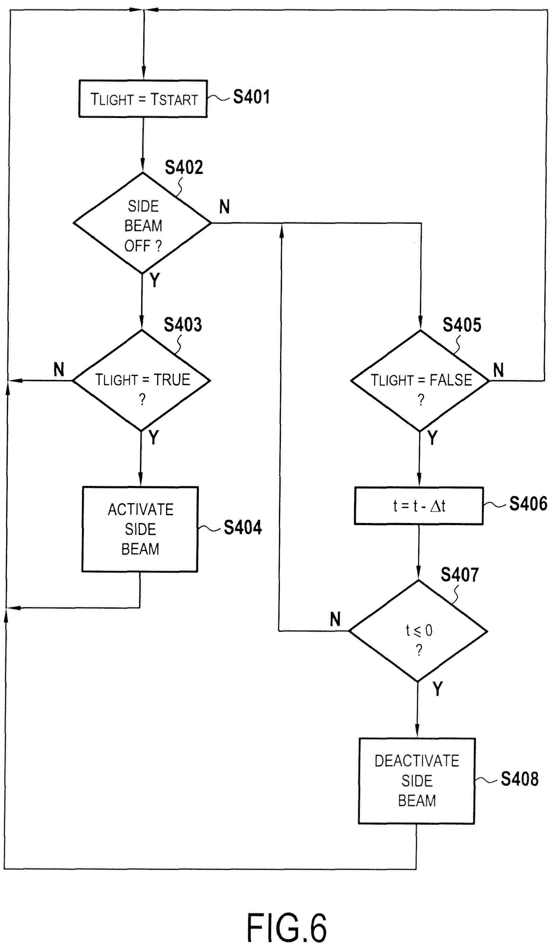

Turning back to FIG. 3, when the side beam 22 is in the active SIDE BEAM ON state 108 and the condition T_{Light} changes from TRUE to FALSE, the side beam does not immediately go back to the inactive SIDE BEAM OFF state 109, but instead goes through a SIDE BEAM TEMPO state 110, in which a timer performs a countdown before the side beam 22 is switched off and goes back to the inactive SIDE BEAM OFF state 108. This process is illustrated in the flowchart of FIG. 6. After this process is started, in a first step S401, the timer t is set to a countdown start time tₛₜₐᵣₜ. In the next step S402, it is determined whether the side beam 22 is inactive. If the side beam 22 is determined to be inactive in step S402, the process advances to step S403, in which it is determined whether T_{Light} is set to TRUE. If in step S403 it is determined that T_{Light} is set to TRUE, the process proceeds to step S404, in which the side beam 22 is activated, entering the SIDE BEAM ON state 109 of FIG. 3, and then jumps back to step S401. On the other hand, if in step S403 it is determined that T_{Light} is set to FALSE, the process jumps directly back to step S401.

If the side beam 22 is already active is step S402, the process advances to step S405, in which it is determined whether T_{Light} is set to FALSE. If T_{Light} is set to FALSE, that is, if the conditions for activating the side beam are no longer fulfilled, the process enters a countdown loop, corresponding to the SIDE BEAM TEMPO state 110 of FIG. 3, in which a decrement Δt is subtracted from the countdown timer t at each cycle in step S406, before checking in step S407 whether the value of this countdown timer t has decreased to 0 or lower. If the value of countdown timer t has not yet decreased to 0, the process loops back to step S405. On the other hand, if in step S407 the value of t is no longer higher than 0, the process exits the countdown loop and advances to step S408, in which the side beam is turned off, going back to the SIDE BEAM OFF state 111, before jumping back to step S401.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. Method for controlling a headlight (15) of a motor vehicle (1), comprising the steps of:
determining whether the motor vehicle (1) is reversing ;
measuring a position of an obstacle (20) within a detection range of a rear end proximity sensor (10) of a set of proximity sensors (9,10) of the motor vehicle (1) ;
calculating a path of the obstacle (20) within detection range of the rear end proximity sensor (10) relatively to the reversing motor vehicle (1) ;
determining whether said calculated path enters a predetermined range (21) of a front end corner of the motor vehicle (1) ; and
if said calculated path crosses into said predetermined range (21) of a front end corner of the motor vehicle (1), activating a headlight side beam (22) associated with said front end corner.

2. Method according to claim 1, also comprising the steps of:
measuring a position of an obstacle (20) within a detection range of a front end proximity sensor (9) of said set of proximity sensors (9,10) ;
determining whether the position of the obstacle (20) within detection range of the front end proximity sensor (9) is within said predetermined range of a front end corner of the motor vehicle (1) ; and
if the position of the obstacle (20) within detection range of the front end proximity sensor (9) is within said predetermined range (21) of a front end corner of the motor vehicle (1) and a headlight side beam (22) associated with said front end corner is not already active, activating this headlight side beam (22).

3. Method according to claim 2, wherein, if the position of the obstacle (20) within detection range of the front end proximity sensor (9) is within said predetermined range (21) of a front end corner of the motor vehicle (1) and a headlight side beam (22) associated with said front end corner is already active, said headlight side beam (22) is steered so as to track the obstacle (20).

4. Method according to any one of claims 1 to 3, wherein said set of proximity sensors (9,10) is activated only if the motor vehicle is not moving forward faster than a predetermined speed.

5. Method according to claim 4, wherein said set of proximity sensors (9,10) is activated only if a transmission unit (4) of said motor vehicle is in a forward or reverse drive mode.

6. Headlight control unit (16) for use in a motor vehicle (1) equipped with at least a rear end proximity sensor (10), configured to activate a headlight side beam (22) associated with a front end corner of the motor vehicle (1) if the motor vehicle (1) is reversing and the rear end proximity sensor (10) detects an obstacle (20) whose calculated path, relative to the motor vehicle (1), enters a predetermined range (21) of said front end corner of the vehicle (1).

7. Headlight control unit (16) according to claim 6, wherein the motor vehicle (1) also comprises a front end proximity sensor (9), the headlight control unit (16) being also configured to activate the headlight side beam (22) if the front end proximity sensor (9) detects an obstacle (20) within said predetermined range (21) of the front end corner of the motor vehicle (1).

8. Headlight control unit (16) according to claim 7, configured to steer the headlight side beam (22) to track the obstacle (20) within said predetermined range (21) of the front end corner of the motor vehicle (1).

9. Motor vehicle headlight system, comprising a set of headlights (15), each headlight (15) of said set having a side beam (22), and a headlight control unit (16) according to any one of claims 6 to 8 for controlling said set of headlights (15).

10. Motor vehicle (1) comprising a motor vehicle headlight system according to claim 9, and a set of proximity sensors (9,10) comprising at least a rear end proximity sensor (10) connected to said headlight control unit (16).

11. Motor vehicle according to claim 10, wherein said set of proximity sensors (9,10) also comprise at least a front end proximity sensor (9) connected to said headlight control unit (16).

12. Motor vehicle (1) according to any one of claims 10 or 11, comprising a parking assistance system including said set of proximity sensors (9,10).

13. Motor vehicle (1) according to claim 10, wherein said parking assistance system is configured so as to be only activated if the motor vehicle (1) is not moving forward faster than a predetermined speed.

14. Motor vehicle (1) according to claim 11, further comprising a transmission unit (4), wherein said parking assistance system is configured so as to be only activated if said transmission unit (4) is also engaged in a forward or reverse drive position.

## Patentansprüche

1. Verfahren zum Steuern eines Scheinwerfers (15) eines Kraftfahrzeugs (1), umfassend die Schritte:
Bestimmen, ob das Kraftfahrzeug (1) rückwärts fährt,
Messen einer Position eines Hindernisses (20) innerhalb eines Detektierbereichs eines heckseitigen Näherungssensors (10) aus einem Satz von Näherungssensoren (9, 10) des Kraftfahrzeugs (1),
Berechnen eines Wegs des Hindernisses (20) innerhalb des Detektierbereichs des heckseitigen Näherungssensors (10) in Bezug auf das rückwärts fahrende Kraftfahrzeug (1),
Bestimmen, ob der berechnete Weg in einen vorgegebenen Bereich (21) einer frontseitigen Ecke des Kraftfahrzeugs (1) eindringt, und,
wenn der berechnete Weg in den vorgegebenen Bereich (21) einer frontseitigen Ecke des Kraftfahrzeugs (1) eindringt, Aktivieren eines Scheinwerferseitenstrahlenbündels (22), welches der frontseitigen Ecke zugeordnet ist.

2. Verfahren nach Anspruch 1, ferner umfassend folgende Schritte:
Messen einer Position eines Hindernisses (20) innerhalb eines Detektierbereichs eines frontseitigen Näherungssensors (9) aus dem Satz von Näherungssensoren (9, 10),
Bestimmen, ob die Position des Hindernisses (20) innerhalb des Detektierbereichs des frontseitigen Näherungssensors (9) innerhalb des vorgegebenen Bereichs einer frontseitigen Ecke des Kraftfahrzeugs (1) ist, und,
wenn die Position des Hindernisses (20) innerhalb des Detektierbereichs des frontseitigen Näherungssensors (9) innerhalb des vorgegebenen Bereichs (21) einer frontseitigen Ecke des Kraftfahrzeugs (1) ist und ein Scheinwerferseitenstrahlenbündel (22), das der frontseitigen Ecke zugeordnet ist, nicht bereits aktiv ist, Aktivieren dieses Scheinwerferseitenstrahlenbündels (22).

3. Verfahren nach Anspruch 2, wobei, wenn die Position des Hindernisses (20) innerhalb des Detektierbereichs des frontseitigen Näherungssensors (9) innerhalb des vorgegebenen Bereichs (21) einer frontseitigen Ecke des Kraftfahrzeugs (1) ist und ein Scheinwerferseitenstrahlenbündel (22), das der frontseitigen Ecke zugeordnet ist, bereits aktiv ist, das Scheinwerferseitenstrahlenbündel (22) derart gelenkt wird, dass es das Hindernis (20) verfolgt.

4. Verfahren nach einem beliebigen der Ansprüche 1 bis 3, wobei der Satz von Näherungssensoren (9, 10) nur dann aktiviert wird, wenn sich das Kraftfahrzeug nicht schneller als mit einer vorgegebenen Geschwindigkeit vorwärts bewegt.

5. Verfahren nach Anspruch 4, wobei der Satz von Näherungssensoren (9, 10) nur dann aktiviert wird, wenn sich eine Getriebeeinheit (4) des Kraftfahrzeugs in einem Vorwärts- oder Rückwärtsfahrtmodus befindet.

6. Scheinwerfersteuerungseinheit (16) zur Verwendung in einem Kraftfahrzeug (1), das mit mindestens einem heckseitigen Näherungssensor (10) ausgestattet ist, welche dazu ausgebildet ist, ein Scheinwerferseitenstrahlenbündel (22) zu aktivieren, das einer frontseitigen Ecke des Kraftfahrzeugs (1) zugeordnet ist, wenn das Kraftfahrzeug (1) rückwärts fährt und der heckseitige Näherungssensor (10) ein Hindernis (20) detektiert, dessen berechneter Weg relativ zu dem Kraftfahrzeug (1) in einen vorgegebenen Bereich (21) der frontseitigen Ecke des Fahrzeugs (1) eindringt.

7. Scheinwerfersteuerungseinheit (16) nach Anspruch 6, wobei das Kraftfahrzeug (1) auch einen frontseitigen Näherungssensor (9) umfasst, wobei die Scheinwerfersteuerungseinheit (16) auch dazu ausgebildet ist, das Scheinwerferseitenstrahlenbündel (22) zu aktivieren, wenn der frontseitige Näherungssensor (9) ein Hindernis (20) innerhalb des vorgegebenen Bereichs (21) der frontseitigen Ecke des Kraftfahrzeugs (1) detektiert.

8. Scheinwerfersteuerungseinheit (16) nach Anspruch 7, die dazu ausgebildet, das Scheinwerferseitenstrahlenbündel (22) zu lenken, um das Hindernis (20) innerhalb des vorgegebenen Bereichs (21) der frontseitigen Ecke des Kraftfahrzeugs (1) zu verfolgen.

9. Kraftfahrzeugscheinwerfersystem, das einen Satz von Scheinwerfern (15), wobei jeder Scheinwerfer (15) des Satzes ein Seitenstrahlenbündel (22) aufweist, und eine Scheinwerfersteuerungseinheit (16) nach einem beliebigen der Ansprüche 6 bis 8 zum Steuern des Satzes von Scheinwerfern (15) umfasst.

10. Kraftfahrzeug (1), umfassend ein Kraftfahrzeugscheinwerfersystem nach Anspruch 9 und einen Satz von Näherungssensoren (9, 10), welcher mindestens einen heckseitigen Näherungssensor (10) umfasst, der mit der Scheinwerfersteuerungseinheit (16) verbunden ist.

11. Kraftfahrzeug nach Anspruch 10, wobei der Satz von Näherungssensoren (9, 10) auch mindestens einen frontseitigen Näherungssensor (9), der mit der Scheinwerfersteuerungseinheit (16) verbunden ist, umfasst.

12. Kraftfahrzeug (1) nach einem beliebigen der Ansprüche 10 oder 11, umfassend ein Einparkhilfesystem, das den Satz von Näherungssensoren (9, 10) umfasst.

13. Kraftfahrzeug (1) nach Anspruch 10, wobei das Parkhilfesystem dazu ausgebildet ist, nur dann aktiviert zu sein, wenn sich das Kraftfahrzeug (1) nicht schneller als mit einer vorgegebenen Geschwindigkeit vorwärts bewegt.

14. Kraftfahrzeug (1) nach Anspruch 11, ferner umfassend eine Getriebeeinheit (4), wobei das Einparkhilfesystem dazu ausgebildet ist, nur dann aktiviert zu sein, wenn sich auch die Getriebeeinheit (4) in einer Vorwärts- oder Rückwärtsfahrtstellung in Eingriff befindet.

## Revendications

1. Procédé pour commander un phare (15) d'un véhicule à moteur (1), comprenant les étapes consistant à :
déterminer si le véhicule à moteur (1) est en marche arrière ;
mesurer une position d'un obstacle (20) dans une plage de détection d'un capteur de proximité d'extrémité arrière (10) d'un ensemble de capteurs de proximité (9, 10) du véhicule à moteur (1) ;
calculer une trajectoire de l'obstacle (20) dans la plage de détection du capteur de proximité d'extrémité arrière (10) par rapport au véhicule à moteur (1) en marche arrière ;
déterminer si ladite trajectoire calculée entre dans une plage prédéterminée (21) d'un coin d'extrémité avant du véhicule à moteur (1) ; et
si ladite trajectoire calculée passe dans ladite plage prédéterminée (21) d'un coin d'extrémité avant du véhicule à moteur (1), activer un faisceau latéral de phare (22) associé audit coin d'extrémité avant.

2. Procédé selon la revendication 1, comprenant également les étapes consistant à :
mesurer une position d'un obstacle (20) dans une plage de détection d'un capteur de proximité d'extrémité avant (9) dudit ensemble de capteurs de proximité (9, 10) ;
déterminer si la position de l'obstacle (20) dans la plage de détection du capteur de proximité d'extrémité avant (9) est dans ladite plage prédéterminée d'un coin d'extrémité avant du véhicule à moteur (1) ; et
si la position de l'obstacle (20) dans la plage de détection du capteur de proximité d'extrémité avant (9) est dans ladite plage prédéterminée (21) d'un coin d'extrémité avant du véhicule à moteur (1) et qu'un faisceau latéral de phare (22) associé audit coin d'extrémité avant n'est pas encore actif, activer ce faisceau latéral de phare (22).

3. Procédé selon la revendication 2, dans lequel, si la position de l'obstacle (20) dans la plage de détection du capteur de proximité d'extrémité avant (9) est dans ladite plage prédéterminée (21) d'un coin d'extrémité avant du véhicule à moteur (1) et qu'un faisceau latéral de phase (22) associé audit coin d'extrémité avant est déjà actif, ledit faisceau latéral de phare (22) est dirigé afin de suivre l'obstacle (20).

4. Procédé selon l'une quelconque des revendications 1 à 3, dans lequel ledit ensemble de capteurs de proximité (9, 10) est activé uniquement si le véhicule à moteur n'avance pas plus vite qu'une vitesse prédéterminée.

5. Procédé selon la revendication 4, dans lequel ledit ensemble de capteurs de proximité (9, 10) est activé uniquement si une unité de transmission (4) dudit véhicule à moteur est dans un mode de conduite en marche avant ou en marche arrière.

6. Unité de commande de phare (16) destinée à être utilisée sur un véhicule à moteur (1) équipé avec au moins un capteur de proximité d'extrémité arrière (10), configurée pour activer un faisceau latéral de phare (22) associé à un coin d'extrémité avant du véhicule à moteur (1), si le véhicule à moteur (1) recule et que le capteur de proximité d'extrémité arrière (10) détecte un obstacle (20) dont la trajectoire calculée, par rapport au véhicule à moteur (1), entre dans une plage prédéterminée (21) dudit coin d'extrémité avant du véhicule (1).

7. Unité de commande de phare (16) selon la revendication 6, dans lequel le véhicule à moteur (1) comprend également un capteur de proximité d'extrémité avant (9), l'unité de commande de phare (16) étant également configurée pour activer le faisceau latéral de phare (22) si le capteur de proximité d'extrémité avant (9) détecte un obstacle (20) dans ladite plage prédéterminée (21) du coin d'extrémité avant du véhicule à moteur (1).

8. Unité de commande de phare (16) selon la revendication 7, configurée pour diriger le faisceau latéral de phare (22) pour suivre l'obstacle (20) dans ladite plage prédéterminée (21) du coin d'extrémité avant du véhicule à moteur (1).

9. Système de phare de véhicule à moteur, comprenant un ensemble de phares (15), chaque phare (15) dudit ensemble ayant un faisceau latéral (22) et une unité de commande de phare (16) selon l'une quelconque des revendications 6 à 8 pour commander ledit ensemble de phares (15).

10. Véhicule à moteur (1) comprenant un système de phare de véhicule à moteur selon la revendication 9, et un ensemble de capteurs de proximité (9, 10) comprenant au moins un capteur de proximité d'extrémité arrière (10) raccordé à ladite unité de commande de phare (16).

11. Véhicule à moteur selon la revendication 10, dans lequel ledit ensemble de capteurs de proximité (9, 10) comprend également au moins un capteur de proximité d'extrémité avant (9) raccordé à ladite unité de commande de phare (16).

12. Véhicule à moteur (1) selon l'une quelconque des revendications 10 ou 11, comprenant un système d'assistance au stationnement comprenant ledit ensemble de capteurs de proximité (9, 10).

13. Véhicule à moteur (1) selon la revendication 10, dans lequel ledit système d'assistance au stationnement est configuré afin d'être activé uniquement si le véhicule à moteur (1) n'avance pas plus vite qu'une vitesse prédéterminée.

14. Véhicule à moteur (1) selon la revendication 11, comprenant en outre une unité de transmission (4), dans lequel ledit système d'assistance au stationnement est configuré afin d'être activé uniquement si ladite unité de transmission (4) est également mise en prise dans une position de conduite en marche avant ou en marche arrière.
